# EUROPEAN PATENT APPLICATION

(11) **EP 4 203 286 A1**
(43) Date of publication of application: **28.06.2023**
(21) Application number: 22153316.9
(22) Date of filing: 25.01.2022
(51) Int. Cl.: H02M 3/335, H02M 1/00

(54) **POWER CONTROL OF A NON-ISOLATED MODULAR POWER CONVERTER**

(30) Priority: 23.12.2021 EP 21217610
(71) Applicant: Hitachi Energy Switzerland AG, 5400 Baden (CH)
(72) Inventor: STEINKE, Juergen, 79774 Albbruck (DE); YUAN, ChunMing, Beijing, 100062 (CN)
(74) Representative: Vossius & Partner Patentanwälte Rechtsanwälte mbB

(57) **Abstract**

The present disclosure relates to a device for power control of a common power converter comprising: a primary converter comprising a first plurality of sub-converters; a secondary converter comprising a second plurality of sub-converters; wherein the primary converter is electrically coupled to the secondary converter, and to a plurality of transformers, wherein a first sub-converter in the first plurality of sub-converters is electrically coupled to a first transformer in the plurality of transformers, and the first transformer is further electrically coupled to a first sub-converter in the second plurality of sub-converters; and wherein a second sub-converter in the first plurality of sub-converters is electrically coupled to a second transformer in the plurality of transformers and the second transformer is electrically coupled to a second sub-converter in the second plurality of sub-converters. The present disclosure also relates to a respective control method, a controller and system.

## Description

The present disclosure relates to a device, a method, a controller, and a system for power control of a non-isolated modular power converter.

Distribution networks initially distribute and operate at a high voltage where the transmission efficiency is high, then convert the voltage levels down using power converters. Traditionally, an AC power distribution system has been predominantly implemented, wherein the standard device to convert the power between two voltage levels is a transformer. In the light of the recent development and the increased market share of distributed energy resources, DERs, in particular DC DERs, and DC loads such as electrical vehicle charging stations, it has become of high importance to develop of a power converter, in particular a DC/DC power converter, to couple the DC apparatus to the AC distribution or among themselves with a high efficiency and modularity.

Conventionally, a DC/DC converter, particularly a non-isolating DC/DC converter, is designed based on the Buck-boost converter topology which only requires one active switch and one diode in a unidirectional operation or two active switches with free-wheeling diodes for a bidirectional configuration. However, said configuration suffers from a non-continuous power transfer and high complexity of series connected semiconductors. Although, the energy flow can be smoothened either by operating the switches at a very high switching frequency or operating multiple small conversion stages with a staggered switching pattern, this results in a poor power efficiency as soon as the voltage level is in the middle/higher medium voltage range e.g.) higher than 3000 V, where a series connection of semiconductors is required.

Alternatively, a non-isolating DC/DC converter can be designed with modular multilevel converters, MMC, and a single transformer, wherein the MMCs are connected in series and the single transformer further connects the MMCs. Said topology smooths the output, owing to the high granularity in the voltage resolution offered by the MMCs and further avoids the complex series connection of semiconductors. MMC products are composed of standardized power electronics building blocks, which can be used without the need for a new design to scale the power of the MMC converter to a project need. Such a kind of product is often called a "modular product". However, the single transformer needs to be designed and tuned for each project, rendering said solution non-modular. Moreover, the MMCs are normally designed for conversion stages operated at low AC frequencies, e.g., not more than 60 Hz. In order to use the standardized MMC building blocks the transformer thus could be a conventional 50 Hz or 60 Hz transformer, which are heavy and bulky. Other proposals recommend using an increased frequency, e.g., 400 Hz or higher, to shrink the transformer size. For doing so, the MMC building blocks must also be specially designed to operate at much higher switching frequencies, which further reduces the ease of re-using existing standardized MMC building blocks.

Thus, there is a need to improve a device, a method, a controller, and a system for power control of a non-isolated modular power converter.

The present disclosure relates to a device, a method, a controller, and a system for power control of a non-isolated modular power converter.

Various exemplary embodiments of the present disclosure disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

### Description of the Drawings

FIG. 1 illustrates a flow chart of a power control method according to an embodiment of the present disclosure.
FIG. 2 illustrates an exemplary non-isolating DC/DC converter comprising a plurality of transformers according to an embodiment of the present disclosure.
FIG. 3 illustrates an exemplary non-isolating DC/DC converter comprising a tertiary converter according to an embodiment of the present disclosure.
FIG. 4a) to FIG. 4d) illustrate various topologies of a DC/DC converter according to embodiments of the present disclosure.
FIG. 5a) and FIG. 5b) illustrate a controller and a system according to an embodiment of the present disclosure, respectively.
FIG. 6 illustrates a method for controlling power of a common power converter according to an embodiment of the present disclosure.
FIG. 7 illustrates a power flow in a common power converter using a method according to an embodiment of the present disclosure.
FIG. 8 illustrates yet another method for controlling power of a common power converter according to an embodiment of the present disclosure.
FIG. 9 illustrates a power flow in a common power converter using a method according to an embodiment of the present disclosure.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

The present disclosure relates to a device for power control of a common power converter comprising: a primary converter comprising a first plurality of sub-converters; a secondary converter comprising a second plurality of sub-converters; wherein the primary converter is electrically coupled to the secondary converter, and to a plurality of transformers, wherein a first sub-converter in the first plurality of sub-converters is electrically coupled to a first transformer in the plurality of transformers, and the first transformer is further electrically coupled to a first sub-converter in the second plurality of sub-converters; and wherein a second sub-converter in the first plurality of sub-converters is electrically coupled to a second transformer in the plurality of transformers and the second transformer is electrically coupled to a second sub-converter in the second plurality of sub-converters.

According to an embodiment, the primary converter is electrically coupled to the secondary converter in series, in particular at least one port of the primary converter is electrically coupled to at least one port of the secondary converter.

According to an embodiment, the output voltage of the common power converter is the potential difference between the node to which the at least one port node of the primary converter is electrically coupled to the at least one port of the secondary converter in series and another port, different from said at least one port, of the secondary converter.

According to an embodiment, the device comprises a tertiary converter, wherein the tertiary converter comprises a third plurality of sub-converters and wherein the first transformer in the plurality of transformers is further electrically coupled to a first sub-converter in the third plurality of sub-converters and/or the second transformerin the plurality of transformers is further electrically coupled to a second sub-converter in the third plurality of sub-converters.

According to an embodiment, the first plurality of sub-converters in the primary converter are electrically coupled to each other in series and/or parallel, and/or the second plurality of sub-converters in the secondary converter are electrically coupled to each other in series and/or in parallel.

According to an embodiment, each transformer of the plurality of transformer carries at least one phase.

According to an embodiment, at least the first sub-converter in the first plurality of sub-converters, the first transformer of the plurality of transformers, and the first sub-converter in the second plurality of sub-converters form a modular solid-state transformer, SST or a part of the SST, in particular a dual active bridge converter.

According to an embodiment, each of the first, second, and/or third plurality of sub-converters comprises or is any one of a DC/DC converter, a DC/AC converter, a AC/DC converter, or an AC/AC converter, in particular a half bridge converter or a full bridge converter.

The present disclosure also relates to a method for controlling power of a common power converter comprising a primary converter, a secondary converter, and a plurality of transformers, the method comprising the steps of: electrically coupling the primary converter to the secondary converter, and to a plurality of transformers, wherein the primary converter comprises a first plurality of sub-converters and the secondary converter comprises a second plurality of sub-converters; electrically coupling a first sub-converter in the first plurality of sub-converters to a first transformer in the plurality of transformers; electrically further coupling the first transformer to a first sub-converter in the second plurality of sub-converters; electrically coupling a second sub-converter in the first plurality of sub-converters to a second transformer in the plurality of transformers; electrically coupling the second transformer to a second sub-converter in the second plurality of sub-converters; and controlling power of the common power converter.

According to an embodiment, the primary converter is electrically coupled to the secondary converter in series, in particular at least one port of the primary converter is electrically coupled to at least one port of the secondary converter.

According to an embodiment, the output voltage of the common power converter is the potential difference between the node to which the at least one port node of the primary converter is electrically coupled to the at least one port of the secondary converter in series and another port, different from said at least one port, of the secondary converter.

According to an embodiment, the common converter further comprises a tertiary converter, wherein the tertiary converter comprises a third plurality of sub-converters and the method of electrically further coupling the first transformer in the plurality of transformers to a first sub-converter in the third plurality of sub-converters and/or electrically further coupling the second transformer in the plurality of transformers to a second sub-converter in the third plurality of sub-converters.

According to an embodiment, the first plurality of sub-converters in the primary converter are electrically coupled to each other in series and/or parallel, and/or the second plurality of sub-converters in the secondary converter are electrically coupled to each other in series and/or in parallel.

According to an embodiment, each transformer of the plurality of transformer carries at least one phase.

According to an embodiment, at least the first sub-converter in the first plurality of sub-converters, the first transformer of the plurality of transformers, and the first sub-converter in the second plurality of sub-converters form a modular solid-state transformer, SST or a part of the SST, in particular a dual active bridge converter.

According to an embodiment, each of the first, second, and/orthird plurality of sub-converters comprises or is any one of a DC/DC converter, a DC/AC converter, a AC/DC converter, or an AC/AC converter, in particular a half bridge converter or a full bridge converter.

The present disclosure further relates to a controller for controlling power of a common power converter comprising a primary converter, a secondary converter, a plurality of transformers, and a processor, the processor being configured to: electrically couple the primary converter to the secondary converter, and to a plurality of transformers, wherein the primary converter comprises a first plurality of sub-converters and the secondary converter comprises a second plurality of sub-converters; electrically couple a first sub-converter in the first plurality of sub-converters to a first transformer in the plurality of transformers; electrically further couple the first transformer to a first sub-converter in the second plurality of sub-converters; electrically couple a second sub-converter in the first plurality of sub-converters to a second transformerin the plurality of transformers; electrically couple the second transformer to a second sub-converter in the second plurality of sub-converters; and control power of the common power converter;

According to an embodiment, the primary converter is electrically coupled to the secondary converter in series, in particular at least one port of the primary converter is electrically coupled to at least one port of the secondary converter.

According to an embodiment, the output voltage of the common power converter is the potential difference between the node to which the at least one port node of the primary converter is electrically coupled to the at least one port of the secondary converter in series and another port, different from said at least one port, of the secondary converter.

According to an embodiment, the common power converter further comprises a tertiary converter, wherein the tertiary converter comprises a third plurality of sub-converters and the processor is further configured to electrically further couple the first transformer in the plurality of transformers to a first sub-converter in the third plurality of sub-converters and/or electrically further coupling the second transformer in the plurality of transformers to a second sub-converter in the third plurality of sub-converters.

According to an embodiment, the first plurality of sub-converters in the primary converter are electrically coupled to each other in series and/or parallel, and/or the second plurality of sub-converters in the secondary converter are electrically coupled to each other in series and/or in parallel.

According to an embodiment, each transformer of the plurality of transformer carries at least one phase.

According to an embodiment, at least the first sub-converter in the first plurality of sub-converters, the first transformer of the plurality of transformers, and the first sub-converter in the second plurality of sub-converters form a modular solid-state transformer, SST or a part of the SST, in particular a dual active bridge converter.

According to an embodiment, each of the first, second, and/orthird plurality of sub-converters comprises or is any one of a DC/DC converter, a DC/AC converter, a AC/DC converter, or an AC/AC converter, in particular a half bridge converter or a full bridge converter.

The present disclosure further relates to a system comprising the controller according to any one of above-described embodiment performing the method according to any one of above-described embodiment and the common power converter according to any one of above-described embodiment.

The present disclosure also relates to a method for controlling power of a common power converter according to any one of above described embodiment, the method comprising the steps of: generating, using the first sub-converter in the first plurality of sub-converters, a first at least one AC voltage waveform; generating, using the first sub-converter in the second plurality of sub-converters, a second at least one AC voltage waveform; generating, based on the first at least one AC voltage waveform and on the second at least one AC voltage waveform, a first DC voltage across at least two ports of the first sub-converter in the second plurality of sub-converters; generating, using the second sub-converter in the first plurality of sub-converters, a third at least one AC voltage waveform; generating, using the second sub-converter in the second plurality of sub-converters, a fourth at least one AC voltage waveform; and generating, based on the third at least one AC voltage waveform and on the fourth at least one AC voltage waveform, a second DC voltage across at least two ports of the second sub-converter in the second plurality of sub-converters.

The present disclosure also relates to a method for controlling power of a common power converter according to any one of above described embodiment, the method comprising the steps of: generating, using the first sub-converter in the first plurality of sub-converters, a first at least one AC voltage waveform; generating, using the first sub-converter in the second plurality of sub-converters, a second at least one AC voltage waveform; generating, based on the first at least one AC voltage waveform and on the second at least one AC voltage waveform, a first DC voltage across at least two ports of the first sub-converter in the first plurality of sub-converters; generating, using the second sub-converter in the first plurality of sub-converters, a third at least one AC voltage waveform; generating, using the second sub-converter in the second plurality of sub-converters, a fourth at least one AC voltage waveform; and generating, based on the third at least one AC voltage waveform and on the fourth at least one AC voltage waveform, a second DC voltage across at least two ports of the second sub-converter in the first plurality of sub-converters.

According to an embodiment, the first at least one AC voltage waveform is phase shifted with respect to the second at least one AC voltage waveform with a first phase shift angle and/or the third at least one AC voltage waveform is phase shifted with respect to the fourth at least one AC voltage waveform with a second phase shift angle.

According to an embodiment, the sum of the first DC voltage and the second DC voltage is equal to the voltage across at least two ports of the secondary converter.

According to an embodiment, the sum of the first DC voltage and the second DC voltage is equal to the voltage across at least two ports of the primary converter.

According to an embodiment, the first at least one AC voltage waveform is the voltage waveform across the primary side of the first transformer in the plurality of transformers and the second at least one AC voltage waveform is the voltage waveform across the secondary side of the first transformer in the plurality of transformers.

According to an embodiment, the third at least one AC voltage waveform is the voltage waveform across the primary side of the second transformer in the plurality of transformers and the fourth at least one AC voltage waveform is the voltage waveform across the secondary side of the second transformer in the plurality of transformers.

The following items refer to particular embodiments of the present disclosure:
1. A method for controlling power of a common power converter comprising a primary converter, a secondary converter, and a plurality of transformers, the method comprising the steps of:
   electrically coupling the primary converter to the secondary converter, and to a plurality of transformers,
   wherein the primary converter comprises a first plurality of sub-converters and the secondary converter comprises a second plurality of sub-converters;
   electrically coupling a first sub-converter in the first plurality of sub-converters to a first transformer in the plurality of transformers;
   electrically further coupling the first transformer to a first sub-converter in the second plurality of sub-converters;
   electrically coupling a second sub-converter in the first plurality of sub-converters to a second transformer in the plurality of transformers;
   electrically coupling the second transformer to a second sub-converter in the second plurality of sub-converters; and
   controlling power of the common power converter.
2. The method of item 1, wherein the primary converter is electrically coupled to the secondary converter in series, in particular at least one port of the primary converter is electrically coupled to at least one port of the secondary converter.
3. The method of item 2, wherein the output voltage of the common power converter is the potential difference between the node to which the at least one port node of the primary converter is electrically coupled to the at least one port of the secondary converter in series and another port, different from said at least one port, of the secondary converter.
4. The method of any one of items 1 to 3, wherein the common converter further comprises a tertiary converter, wherein the tertiary converter comprises a third plurality of sub-converters and the method of electrically further coupling the first transformer in the plurality of transformers to a first sub-converter in the third plurality of sub-converters and/or electrically further coupling the second transformer in the plurality of transformers to a second sub-converter in the third plurality of sub-converters.
5. The method of any one of items 1 to 4, wherein the first plurality of sub-converters in the primary converter are electrically coupled to each other in series and/or parallel, and/or the second plurality of sub-converters in the secondary converter are electrically coupled to each other in series and/or in parallel.
6. The method of any one of items 1 to 5, wherein at least the first sub-converter in the first plurality of sub-converters, the first transformer of the plurality of transformers, and the first sub-converter in the second plurality of sub-converters form a modular solid-state transformer, SST or a part of the SST, in particular a dual active bridge converter.
7. The method of any one of items 1 to 6, wherein each of the first, second, and/or third plurality of sub-converters comprises or is any one of a DC/DC converter, a DC/AC converter, a AC/DC converter, or an AC/AC converter, in particular a half bridge converter or a full bridge converter.

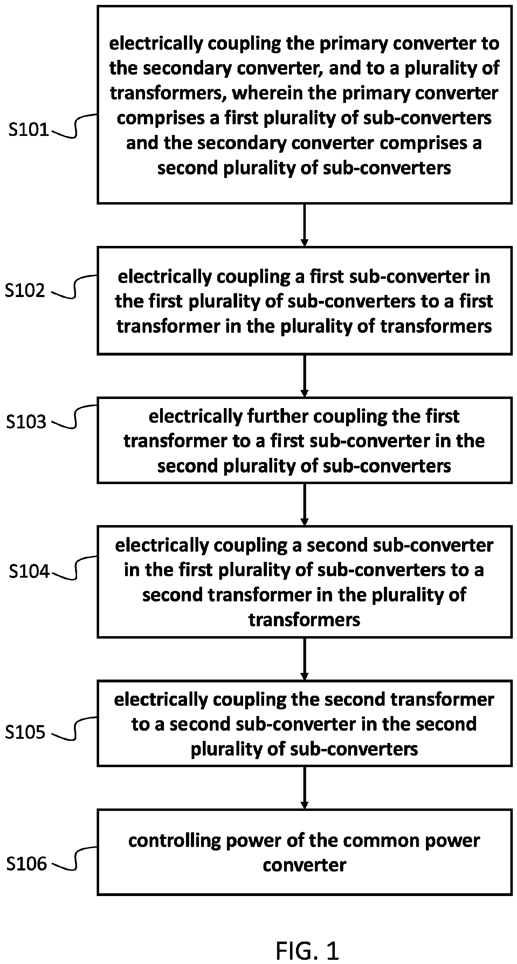

FIG. 1 illustrates a flow chart of a power control method according to an embodiment of the present disclosure.

Block S101 discloses electrically coupling the primary converter to the secondary converter, and to a plurality of transformers, wherein the primary converter comprises a first plurality of sub-converters and the secondary converter comprises a second plurality of sub-converters.

Block S102 discloses electrically coupling a first sub-converter in the first plurality of sub-converters to a first transformer in the plurality of transformers. Then, block S103 discloses electrically further coupling the first transformer to a first sub-converter in the second plurality of sub-converters. Block S104 discloses electrically coupling a second sub-converter in the first plurality of sub-converters to a second transformer in the plurality of transformers. Similarly, block S105 discloses electrically coupling the second transformer to a second sub-converter in the second plurality of sub-converters. Then, block S106 discloses controlling power of the common power converter.

It is understood by the person having ordinary skill in the art that the blocks S101 to S105 in FIG. 1 may be performed in any other order, different from the presented block orders indicated by the arrows therebetween. Moreover, the blocks S101 to S105 may or may not be performed sequentially.

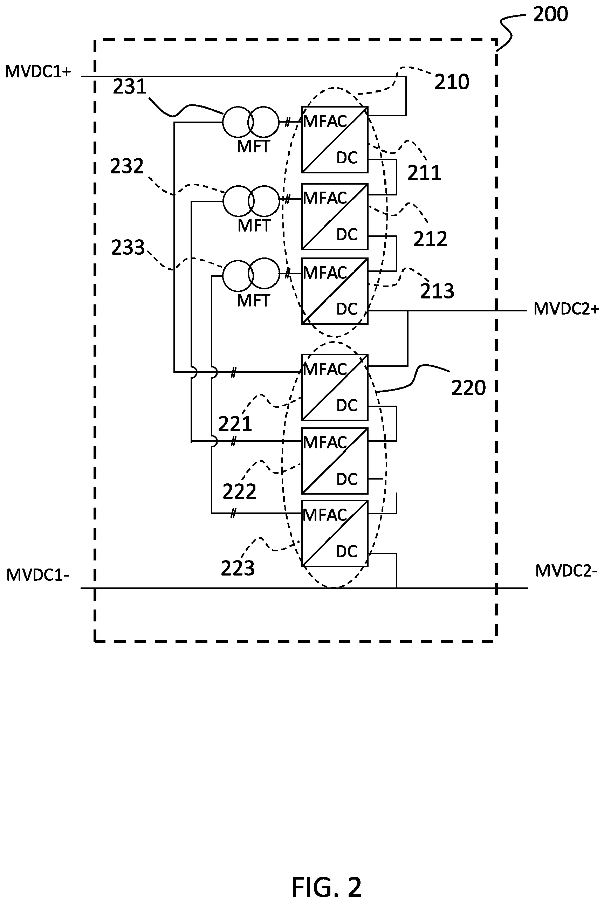

FIG. 2 illustrates an exemplary non-isolating DC/DC converter comprising a plurality of transformers according to an embodiment of the present disclosure.

The common power converter 200 comprises a primary converter 210, a secondary converter 220, and a plurality of transformers 231 to 233. The primary converter 210 comprises a first plurality of sub-converters 211 to 213 and the secondary converter 220 comprises a second plurality of sub-converters 221 to 223. Each of the first plurality of sub-converters 211 to 213 and the second plurality of sub-converters 221 to 223 is a direct current-to-medium frequency alternating current inverter (DC/MFAC) or a medium frequency alternating current-to-direct current rectifier (MFAC/DC). That is, each of the first plurality of sub-converters 211 to 213 and the second plurality of sub-converters 221 to 223 can reversibly operate to converter signals from DC to AC or AC to DC. The primary converter 210 is electrically coupled to the secondary converter 220 in series.

That is, a first positive DC voltage line, MVDC1+, is electrically coupled to a port of the primary converter 210, another port of the primary converter 210 is electrically coupled to a port of the secondary converter 220, and another port of the secondary converter 220 is coupled to a first negative DC voltage line, MVDC1-, (or equivalently a second negative voltage line, MVDC2-) to complete the voltage loop. More specifically, the MVDC1+ is electrically coupled to a first sub-converter 211 in the first plurality of sub-converters 211 to 213, the first sub-converter 211 in the first plurality of sub-converters 211 to 213 is electrically coupled to a second sub-converter 212 in the first plurality of sub-converters 211 to 213 in series, the second sub-converter 212 in the first plurality of sub-converters 211 to 213 is electrically coupled to a third sub-converter 213 in the first plurality of sub-converters 211 to 213 in series, and a second positive DC voltage line, MVDC2+, is electrically coupled to the third sub-converter 213 in the first plurality of sub-converters 211 to 213. Similarly, the MVDC2+ is electrically coupled to a first sub-converter 221 in the second plurality of sub-converters 221 to 223, the first sub-converter 221 in the first plurality of sub-converters 221 to 223 is electrically coupled to a second sub-converter 222 in the second plurality of sub-converters 221 to 223 in series, the second sub-converter 222 in the first plurality of sub-converters 221 to 223 is electrically coupled to a third sub-converter 223 in the second plurality of sub-converters 221 to 223 in series, and the MVDC2-, is electrically coupled to the third sub-converter 223 in the second plurality of sub-converters 221 to 223. The first sub-converter 211 in the first plurality of sub-converters 211 to 213 is electrically coupled to a first transformer 231 and the first transformer 231 is further electrically coupled to the first sub-converter 221 in the second plurality of sub-converters 221 to 223. Similarly, the second sub-converter 212 in the first plurality of sub-converters 211 to 213 is electrically coupled to a second transformer 232 and the second transformer 232 is further electrically coupled to the second sub-converter 222 in the second plurality of sub-converters 221 to 223, and the third sub-converter 213 in the first plurality of sub-converters 211 to 213 is electrically coupled to a third transformer 233 and the third transformer 233 is further electrically coupled to the third sub-converter 223 in the second plurality of sub-converters 221 to 223.

It is understood by the skilled person in the art that the wording 'in' may be interchangeably used with 'of' to describe a component or an element in a set and the meaning thereof may not be limited to the physical inclusion.

According to an embodiment, each transformer of the plurality of transformer carries at least one phase.

According to an embodiment, the primary converter is electrically coupled to the secondary converter in series, in particular at least one port of the primary converter is electrically coupled to at least one port of the secondary converter.

According to an embodiment, the output voltage of the common power converter is the potential difference between the node to which the at least one port node of the primary converter is electrically coupled to the at least one port of the secondary converter in series and another port, different from said at least one port, of the secondary converter.

According to an embodiment, the first plurality of sub-converters in the primary converter are electrically coupled to each other in series and/or parallel, and/or the second plurality of sub-converters in the secondary converter are electrically coupled to each other in series and/or in parallel.

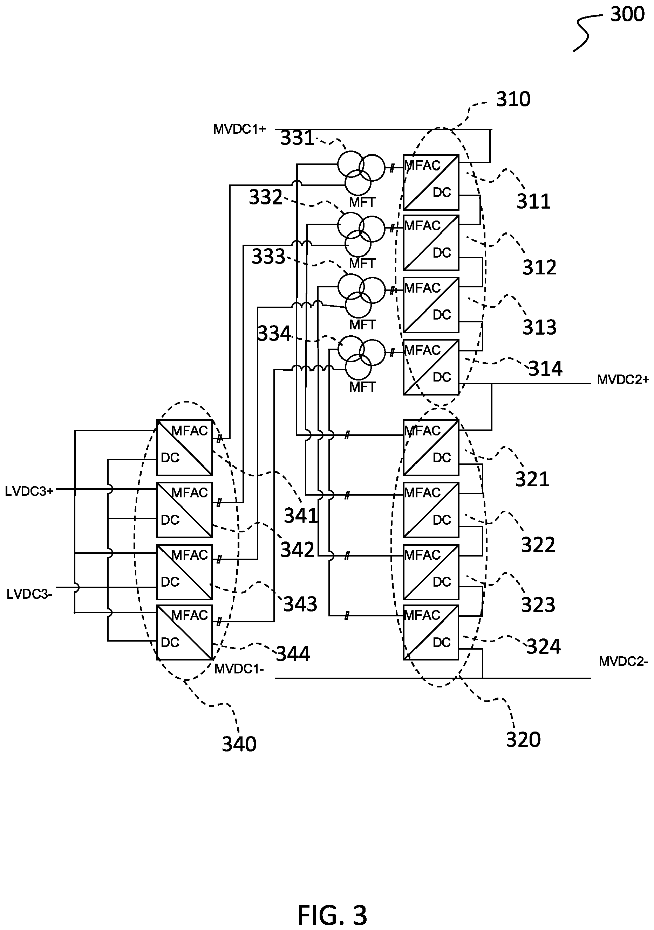

FIG. 3 illustrates an exemplary non-isolating DC/DC converter comprising a tertiary converter according to an embodiment of the present disclosure.

The common power converter 300 comprises a primary converter 310, a secondary converter 320, a plurality of transformers 331 to 334, and a tertiary converter 340. The primary converter 310 comprises a first plurality of sub-converters 311 to 314, the secondary converter 320 comprises a second plurality of sub-converters 321 to 324, and the tertiary converter 340 comprises a third plurality of sub-converters 341 to 344. Each of the first plurality of sub-converters 311 to 314, the second plurality of sub-converters 321 to 324, and the third plurality of sub-converters 341 to 344 is a direct current-to-medium frequency alternating current inverter (DC/MFAC) or a medium frequency alternating current-to-direct current rectifier (MFAC/DC). That is, each of the first plurality of sub-converters 311 to 314, the second plurality of sub-converters 321 to 324, and the third plurality of sub-converters 341 to 344 can reversibly operate to converter signals from DC to AC or AC to DC. The primary converter 310 is electrically coupled to the secondary converter 320 in series. That is, a first positive DC voltage line, MVDC1+, is electrically coupled to a port of the primary converter 310, another port of the primary converter 310 is electrically coupled to a port of the secondary converter 320, and another port of the secondary converter 320 is coupled to a first negative DC voltage line, MVDC1-, (or equivalently a second negative voltage line, MVDC2-) to complete the voltage loop. More specifically, the MVDC1+ is electrically coupled to a first sub-converter 311 in the first plurality of sub-converters 311 to 314, the first sub-converter 311 in the first plurality of sub-converters 311 to 314 is electrically coupled to a second sub-converter 312 in the first plurality of sub-converters 311 to 314 in series, the second sub-converter 312 in the first plurality of sub-converters 311 to 314 is electrically coupled to a third sub-converter 313 in the first plurality of sub-converters 311 to 314 in series, the third sub-converter 313 in the first plurality of sub-converters 311 to 314 is electrically coupled to a fourth sub-converter 33314 in the first plurality of sub-converters 311 to 314 in series, and a second positive DC voltage line, MVDC2+, is electrically coupled to the fourth sub-converter 313 in the first plurality of sub-converters 311 to 313. Similarly, the MVDC2+ is electrically coupled to a first sub-converter 321 in the second plurality of sub-converters 321 to 324, the first sub-converter 321 in the first plurality of sub-converters 321 to 324 is electrically coupled to a second sub-converter 322 in the second plurality of sub-converters 321 to 324 in series, the second sub-converter 322 in the first plurality of sub-converters 321 to 324 is electrically coupled to a third sub-converter 323 in the second plurality of sub-converters 321 to 324 in series, the third sub-converter 323 in the first plurality of sub-converters 321 to 324 is electrically coupled to a fourth sub-converter 324 in the second plurality of sub-converters 321 to 324, and the MVDC2-, is electrically coupled to the fourth sub-converter 324 in the second plurality of sub-converters 321 to 324. The first sub-converter 311 in the first plurality of sub-converters 311 to 314 is electrically coupled to a first transformer 331 and the first transformer 331 is further electrically coupled to the first sub-converter 321 in the second plurality of sub-converters 321 to 324. Similarly, the second sub-converter 312 in the first plurality of sub-converters 311 to 314 is electrically coupled to a second transformer 332 and the second transformer 332 is further electrically coupled to the second sub-converter 322 in the second plurality of sub-converters 321 to 324, the third sub-converter 313 in the first plurality of sub-converters 311 to 314 is electrically coupled to a third transformer 333 and the third transformer 333 is further electrically coupled to the third sub-converter 323 in the second plurality of sub-converters 321 to 324, and the fourth sub-converter 314 in the first plurality of sub-converters 311 to 314 is electrically coupled to a fourth transformer 334 and the fourth transformer 334 is further electrically coupled to the fourth sub-converter 324 in the second plurality of sub-converters 321 to 324. The first transformer 331 is further electrically coupled to a first sub-converter 341 in the third plurality of sub-converters 341 to 344, the second transformer 332 is further electrically coupled to a second sub-converter 342 in the third plurality of sub-converters 341 to 344, the third transformer 334 is further electrically coupled to a third sub-converter 341 in the third plurality of sub-converters 341 to 344, and the fourth transformer 334 is further electrically coupled to the fourth sub-converter 344 in the third plurality of sub-converters 341 to 344. The plurality of sub-converters 341 to 344 in the tertiary converter are electrically coupled to each other in parallel where the potential difference defining thereof is the difference between a third positive low DC voltage, LVDC3+, and a third negative low DC voltage, LVDC3-.

According to an embodiment, the device comprises a tertiary converter, wherein the tertiary converter comprises a third plurality of sub-converters and wherein the first transformer in the plurality of transformers is further electrically coupled to a first sub-converter in the third plurality of sub-converters and/or the second transformer in the plurality of transformers is further electrically coupled to a second sub-converter in the third plurality of sub-converters.

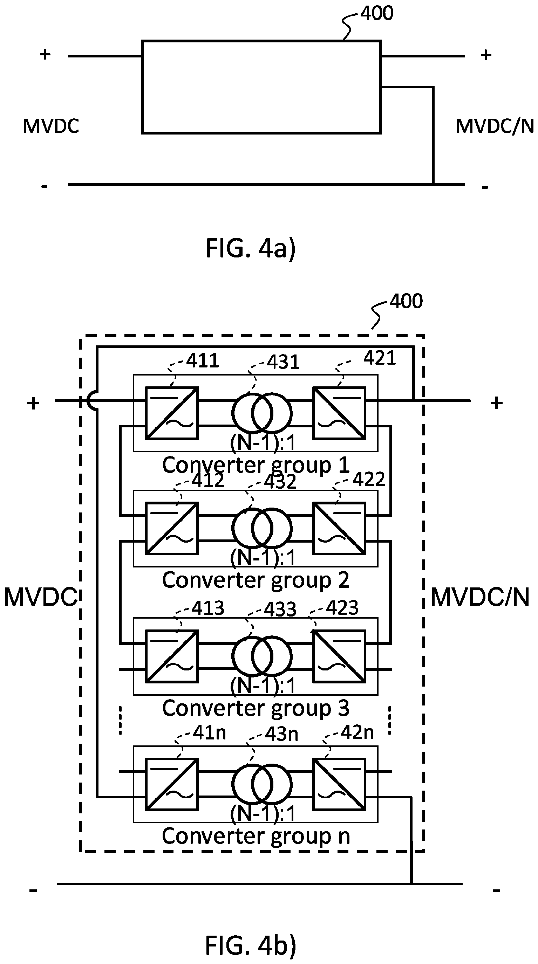

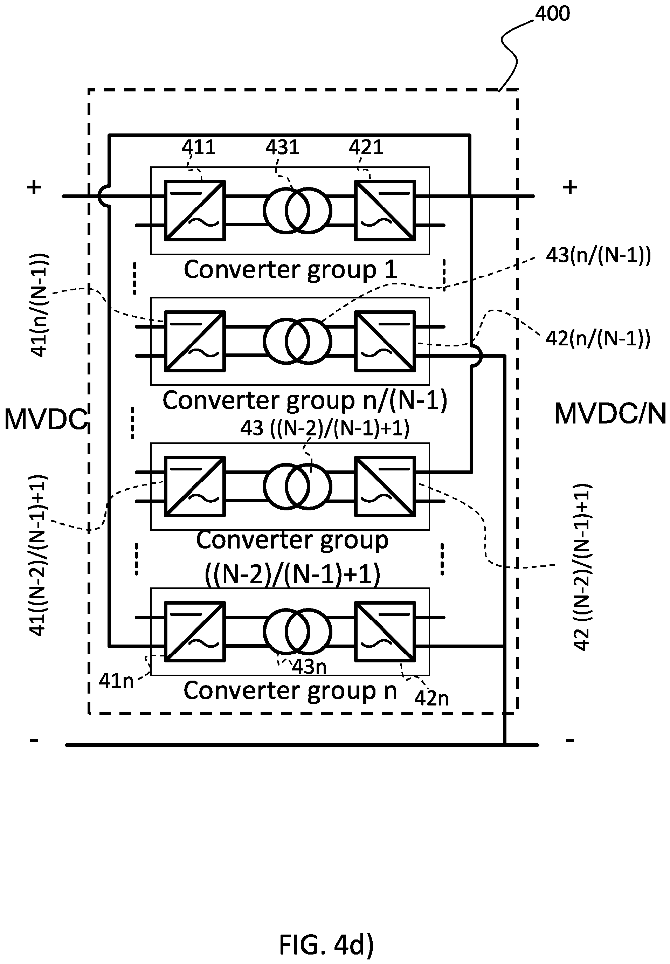

FIG. 4a) to FIG. 4d) illustrate various topologies of a DC/DC converter according to embodiments of the present disclosure.

In particular FIG. 4a) illustrates a DC/DC converter with a N times lower voltage at one side of the common power converter 400, MVDC/N, than the voltage at another side of the common power converter 400, MVDC, wherein N is a positive integer number. FIG. 4b) through FIG. 4d) illustrate exemplary topological variations of the DC/DC converter of FIG. 4a).

FIG. 4b) illustrates a topological configuration for the common power converter 400 to achieve the desired conversion ratio of N based on a plurality of transformers, in particular each having a specific conversion ratio.

The common power converter 400 comprises a primary converter comprising a first plurality of sub-converters 411 to 41n, a secondary converter comprising a second plurality of sub-converters 421 to 42n, and a plurality of transformers 431 to 43n. The primary converter is electrically coupled to the secondary converter in series, more particularly a port of a n^{th} sub-converter 41n in the first plurality of sub-converters 411 to 41n is electrically coupled to a port of a first sub-converter 421 in the second plurality of sub-converters 421 to 42n. The first plurality of sub-converters 411 to 41n in the primary converter are electrically coupled in series and the second plurality of sub-converters 421 to 42n in the secondary converter are electrically coupled in series. Each sub-converter in the first plurality of sub-converters 411 to 41n is electrically coupled to the respective transformer in the plurality of transformers 431 to 43n and each transformer is further electrically coupled to the respective sub-converter in the second plurality of sub-converters 421 to 42n. Each of the respectively coupled sub-converter in the first plurality of sub-converters 411 to 41n, transformer in the plurality of transformers 431 to 43n, and sub-converter in the second plurality of sub-converters form a conversion group. Each transformer in the plurality of transformers 431 to 43n converts voltage and/or power with a conversion ratio of (N-1) to 1 such that the common converter 400, configured as described above, converts voltage and/or power with a conversion ratio of N, that is the common converter establishes a N times lower voltage at the secondary side of the common power converter 400, MVDC/N, than the voltage at the primary side of the common power converter 400, MVDC.

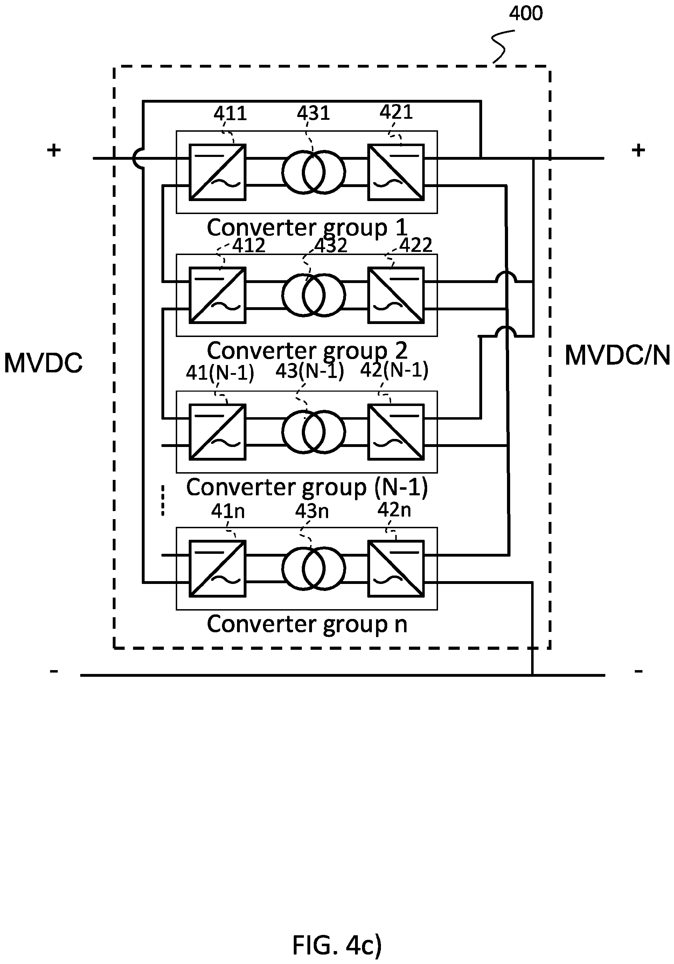

Alternatively, the common power converter 400 achieves the desired conversion ratio of N by determining the number of conversion groups to couple in parallel and in series and electrically coupling based on the determined configuration, as shown in FIG. 4c).

The common power converter 400 comprises a primary converter comprising a first plurality of sub-converters 411 to 41n, a secondary converter comprising a second plurality of sub-converters 421 to 42n, and a plurality of transformers 431 to 43n. The primary converter is electrically coupled to the secondary converter in series, more particularly a port of a n^{th} sub-converter 41n in the first plurality of sub-converters 411 to 41n is electrically coupled to a port of a first sub-converter 421 in the second plurality of sub-converters 421 to 42n. The first plurality of sub-converters 411 to 41n in the primary converter are electrically coupled in series, whereas the first sub-converter 421 to the (N-1)^{th} sub-converter 42(N-1) in the second plurality of sub-converters 421 to 42n in the secondary converter are electrically coupled in parallel and (N-1)^{th} sub-converter 42(N-1) to the nth sub-converter 42n in the second plurality of sub-converters 421 to 42n in the secondary converter are electrically coupled in series, wherein N is equal or smaller than the number of converter groups n. Each sub-converter in the first plurality of sub-converters 411 to 41n is electrically coupled to the respective transformer in the plurality of transformers 431 to 43n and each transformer is further electrically coupled to the respective sub-converter in the second plurality of sub-converters 421 to 42n. Each of the respectively coupled sub-converter in the first plurality of sub-converters 411 to 41n, transformer in the plurality of transformers 431 to 43n, and sub-converter in the second plurality of sub-converters form a conversion group. The common converter 400, configured as described above, converts voltage and/or power with a conversion ratio of N, that is the common converter establishes a N times lower voltage at the secondary side of the common power converter 400, MVDC/N, than the voltage at the primary side of the common power converter 400, MVDC.

FIG. 4d) illustrates a yet another alternative topological configuration for the common power converter 400 to achieve the desired conversion ratio of N by determining the number of conversion groups to couple in parallel and in series and electrically coupling based on the determined configuration.

The common power converter 400 comprises a primary converter comprising a first plurality of sub-converters 411 to 41n, a secondary converter comprising a second plurality of sub-converters 421 to 42n, and a plurality of transformers 431 to 43n. The primary converter is electrically coupled to the secondary converter in series, more particularly a port of a nth sub-converter 41n in the first plurality of sub-converters 411 to 41n is electrically coupled to a port of a first sub-converter 421 in the second plurality of sub-converters 421 to 42n. The first plurality of sub-converters 411 to 41n in the primary converter are electrically coupled in series, whereas the first sub-converter 421 to the (n/(N-1))^{th} sub-converter 42(n/(N-1)) in the second plurality of sub-converters 421 to 42n in the secondary converter are electrically coupled in series and ((N-2)/(N-1)+1)^{th} sub-converter 42((N-2)/(N-1)+1) to the n^{th} sub-converter 42n in the second plurality of sub-converters 421 to 42n in the secondary converter are electrically coupled in series, wherein N is equal or smaller than the number of converter groups n. The series connected first sub-converter 421 to the (n/(N-1))^{th} sub-converter 42(n/(N-1)) in the second plurality of sub-converters 421 to 42n in the secondary converter are electrically coupled in parallel to the series connected ((N-2)/(N-1)+1)^{th} sub-converter 42((N-2)/(N-1)+1) to the n^{th} sub-converter 42n in the second plurality of sub-converters 421 to 42n in the secondary converter. Each sub-converter in the first plurality of sub-converters 411 to 41n is electrically coupled to the respective transformer in the plurality of transformers 431 to 43n and each transformer is further electrically coupled to the respective sub-converter in the second plurality of sub-converters 421 to 42n. Each of the respectively coupled sub-converter in the first plurality of sub-converters 411 to 41n, transformer in the plurality of transformers 431 to 43n, and sub-converter in the second plurality of sub-converters form a conversion group. The common converter 400, configured as described above, converts voltage and/or power with a conversion ratio of N, that is the common converter establishes a N times lower voltage at the secondary side of the common power converter 400, MVDC/N, than the voltage at the primary side of the common power converter 400, MVDC.

According to an embodiment, at least the first sub-converter in the first plurality of sub-converters, the first transformer of the plurality of transformers, and the first sub-converter in the second plurality of sub-converters form a modular solid-state transformer, SST or a part of the SST, in particular a dual active bridge converter.

According to an embodiment, each of the first, second, and/orthird plurality of sub-converters comprises or is any one of a DC/DC converter, a DC/AC converter, a AC/DC converter, or an AC/AC converter, in particular a half bridge converter or a full bridge converter.

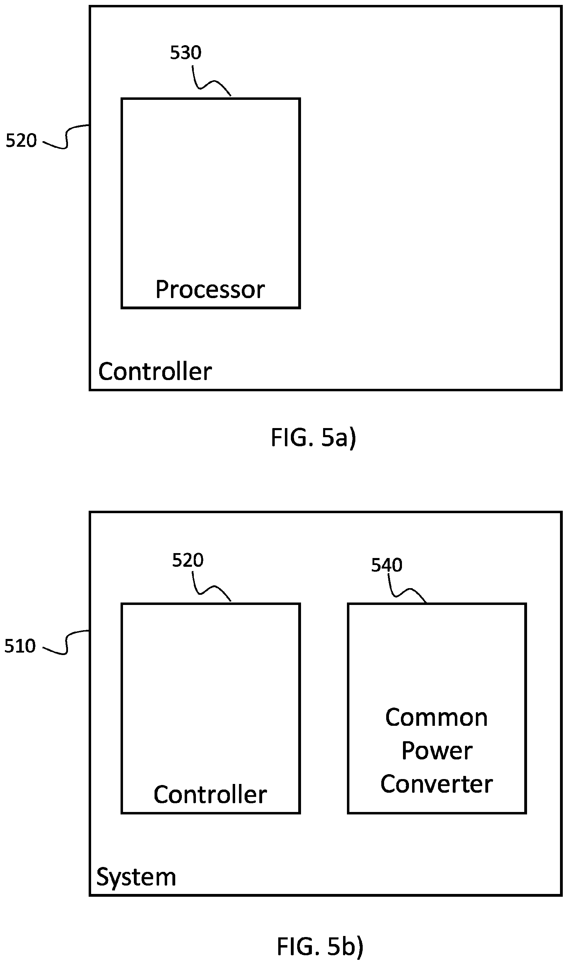

FIG. 5a) and FIG. 5b) illustrate a controller and a system according to an embodiment of the present disclosure, respectively. The controller 520 comprises a processor 530 configured to perform the methods described in FIG. 1 or according to any one of the described embodiments herein to control power of the common power converter 200, 300, and 400 according to any one of the described embodiment herein. The system 510 comprises the above described controller 520 and the common power converter 520 configured according to any one of the described embodiments herein.

According to an embodiment, the primary converter is electrically coupled to the secondary converter in series, in particular at least one port of the primary converter is electrically coupled to at least one port of the secondary converter.

According to an embodiment, the output voltage of the common power converter is the potential difference between the node to which the at least one port node of the primary converter is electrically coupled to the at least one port of the secondary converter in series and another port, different from said at least one port, of the secondary converter.

According to an embodiment, the common power converter further comprises a tertiary converter, wherein the tertiary converter comprises a third plurality of sub-converters and the processor is further configured to electrically further couple the first transformer in the plurality of transformers to a first sub-converter in the third plurality of sub-converters and/or electrically further coupling the second transformer in the plurality of transformers to a second sub-converter in the third plurality of sub-converters.

According to an embodiment, the first plurality of sub-converters in the primary converter are electrically coupled to each other in series and/or parallel, and/or the second plurality of sub-converters in the secondary converter are electrically coupled to each other in series and/or in parallel.

According to an embodiment, at least the first sub-converter in the first plurality of sub-converters, the first transformer of the plurality of transformers, and the first sub-converter in the second plurality of sub-converters form a modular solid-state transformer, SST or a part of the SST, in particular a dual active bridge converter.

According to an embodiment, each of the first, second, and/or third plurality of sub-converters comprises or is any one of a DC/DC converter, a DC/AC converter, a AC/DC converter, or an AC/AC converter, in particular a half bridge converter or a full bridge converter.

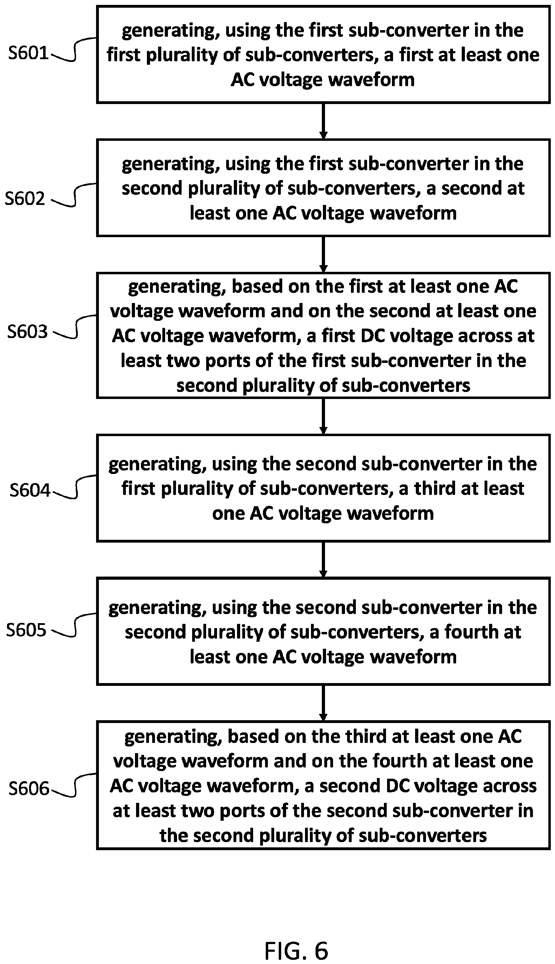

FIG. 6 illustrates a method for controlling power of a common power converter according to an embodiment of the present disclosure.

Block S601 discloses generating, using the first sub-converter in the first plurality of sub-converters, a first at least one AC voltage waveform. Block S602 discloses generating, using the first sub-converter in the second plurality of sub-converters, a second at least one AC voltage waveform. Block S603 discloses generating, based on the first at least one AC voltage waveform and on the second at least one AC voltage waveform, a first DC voltage across at least two ports of the first sub-converter in the second plurality of sub-converters. Block S604 discloses generating, using the second sub-converter in the first plurality of sub-converters, a third at least one AC voltage waveform. Block S605 discloses generating, using the second sub-converter in the second plurality of sub-converters, a fourth at least one AC voltage waveform. Then, block S605 discloses generating, based on the third at least one AC voltage waveform and on the fourth at least one AC voltage waveform, a second DC voltage across at least two ports of the second sub-converter in the second plurality of sub-converters.

It is understood by the person having ordinary skill in the art that the blocks S601 to S606 in FIG. 6 may be performed in any other order, different from the presented block orders indicated by the arrows therebetween. Moreover, the blocks S601 to S606 may or may not be performed sequentially.

According to an embodiment, the first at least one AC voltage waveform is phase shifted with respect to the second at least one AC voltage waveform with a first phase shift angle and/or the third at least one AC voltage waveform is phase shifted with respect to the fourth at least one AC voltage waveform with a second phase shift angle.

According to an embodiment, the sum of the first DC voltage and the second DC voltage is equal to the voltage across at least two ports of the secondary converter.

According to an embodiment, the first at least one AC voltage waveform is the voltage waveform across the primary side of the first transformer in the plurality of transformers and the second at least one AC voltage waveform is the voltage waveform across the secondary side of the first transformer in the plurality of transformers.

According to an embodiment, the third at least one AC voltage waveform is the voltage waveform across the primary side of the second transformer in the plurality of transformers and the fourth at least one AC voltage waveform is the voltage waveform across the secondary side of the second transformer in the plurality of transformers.

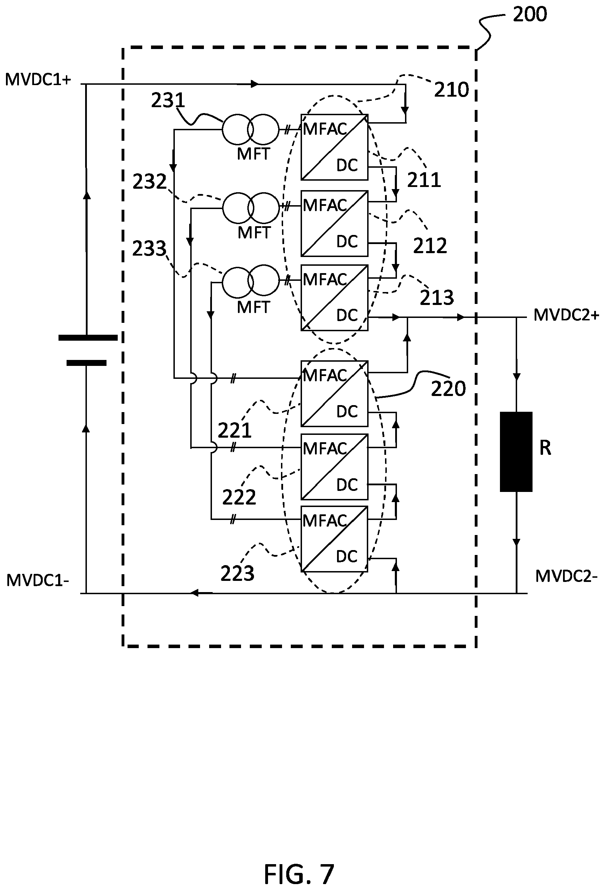

FIG. 7 illustrates a power flow in a common power converter using a method according to an embodiment of the present disclosure. In particular, the method disclosed in FIG. 6 is applied to the power converter disclosed in FIG. 2, whereto electrical components are added. The reference numerals therein are omitted for simplicity. As evident from FIG. 7, a DC source is electrically connected between two ports, MVDC1+ and MVDC1-, and a load R is electrically connected between two ports, MVDC2+ and MVDC2-. It is understood by the skilled person that, in view of the common power converter disclosed in FIG. 7, the method further comprises the generating steps using the third sub-converter 223 in the second plurality of sub-converters 220. That is, when the method of FIG. 6 is applied to the common power converter disclosed in FIG. 7, the method further comprises: generating, using the third sub-converter 223 in the second plurality of sub-converters 220, a third at least two AC voltage waveforms; and generating, based on the third at least two AC voltage waveforms, a third DC voltage across at least two ports of the third sub-converter 223 in the second plurality of sub-converters 220. Consequently, the power flows, as indicated by the arrows on the electrically connecting wires in FIG. 7, from the source to the load R. That is, the power transfers from MVDC1+/- to MVDC2+/-.

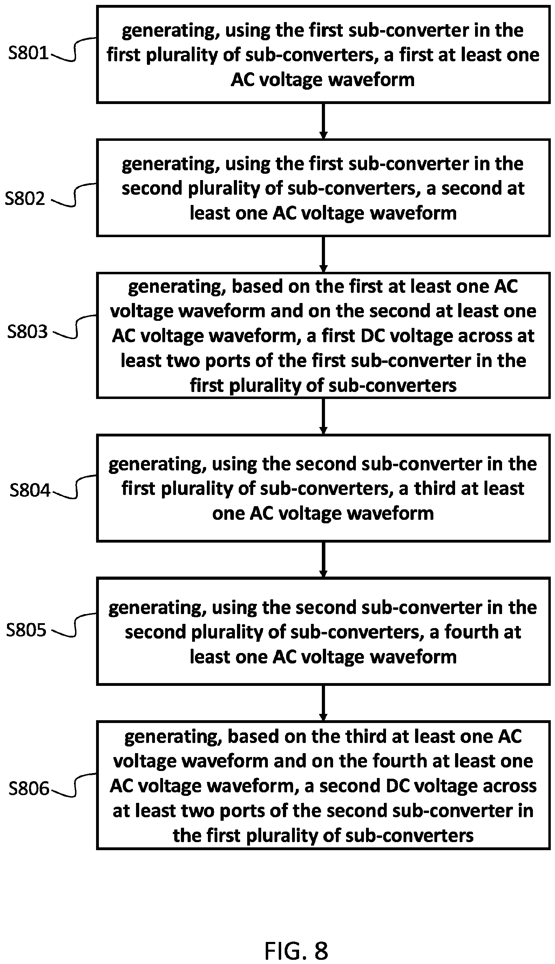

FIG. 8 illustrates yet another method for controlling power of a common power converter according to an embodiment of the present disclosure.

Block S801 discloses generating, using the first sub-converter in the first plurality of sub-converters, a first at least one AC voltage waveform. Block S802 discloses generating, using the first sub-converter in the second plurality of sub-converters, a second at least one AC voltage waveform. Block S803 discloses generating, based on the first at least one AC voltage waveform and on the second at least one AC voltage waveform, a first DC voltage across at least two ports of the first sub-converter in the first plurality of sub-converters. Block S804 generating, using the second sub-converter in the first plurality of sub-converters, a third at least one AC voltage waveform. Block S805 discloses generating, using the second sub-converter in the second plurality of sub-converters, a fourth at least one AC voltage waveform. Then, block S806 discloses generating, based on the third at least one AC voltage waveform and on the fourth at least one AC voltage waveform, a second DC voltage across at least two ports of the second sub-converter in the first plurality of sub-converters.

It is understood by the person having ordinary skill in the art that the blocks S801 to S806 in FIG. 8 may be performed in any other order, different from the presented block orders indicated by the arrows therebetween. Moreover, the blocks S801 to S806 may or may not be performed sequentially.

According to an embodiment, the first at least one AC voltage waveform is phase shifted with respect to the second at least one AC voltage waveform with a first phase shift angle and/or the third at least one AC voltage waveform is phase shifted with respect to the fourth at least one AC voltage waveform with a second phase shift angle.

According to an embodiment, the sum of the first DC voltage and the second DC voltage is equal to the voltage across at least two ports of the primary converter.

According to an embodiment, the first at least one AC voltage waveform is the voltage waveform across the primary side of the first transformer in the plurality of transformers and the second at least one AC voltage waveform is the voltage waveform across the secondary side of the first transformer in the plurality of transformers.

According to an embodiment, the third at least one AC voltage waveform is the voltage waveform across the primary side of the second transformer in the plurality of transformers and the fourth at least one AC voltage waveform is the voltage waveform across the secondary side of the second transformer in the plurality of transformers.

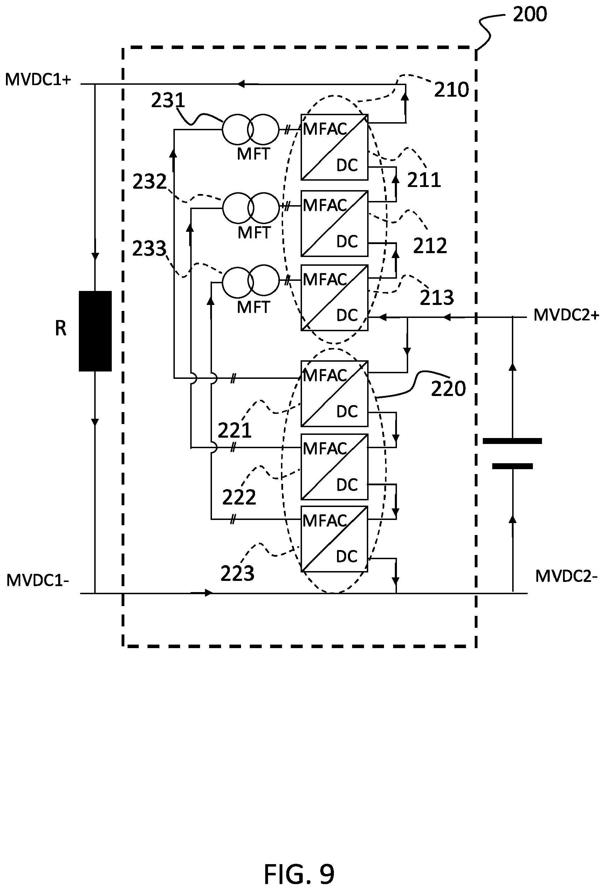

FIG. 9 illustrates a power flow in a common power converter using a method according to an embodiment of the present disclosure. In particular, the method disclosed in FIG. 8 is applied to the power converter disclosed in FIG. 2, whereto electrically components are added. The reference numerals therein are omitted for simplicity. As evident from FIG. 9, a DC source is electrically connected between two ports, MVDC2+ and MVDC2-, and a load R is electrically connected between two ports, MVDC1+ and MVDC1-. It is understood by the skilled person that, in view of the common power converter disclosed in FIG. 9, the method further comprises the generating steps using the third sub-converter 213 in the first plurality of sub-converters 210. That is, when the method of FIG. 8 is applied to the common power converter disclosed in FIG. 9, the method further comprises: generating, using the third sub-converter 213 in the first plurality of sub-converters 210, a third at least two AC voltage waveforms; and generating, based on the third at least two AC voltage waveforms, a third DC voltage across at least two ports of the third sub-converter 213 in the first plurality of sub-converters 210. Consequently, the power flows, as indicated by the arrows on the electrically connecting wires in FIG. 9, from the source to the load R. That is, the power transfers from MVDC2+/- to MVDC1+/-.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A device for power control of a common power converter comprising:
a primary converter comprising a first plurality of sub-converters;
a secondary converter comprising a second plurality of sub-converters;
wherein the primary converter is electrically coupled to the secondary converter, and to a plurality of transformers, wherein a first sub-converter in the first plurality of sub-converters is electrically coupled to a first transformer in the plurality of transformers, and the first transformer is further electrically coupled to a first sub-converter in the second plurality of sub-converters; and
wherein a second sub-converter in the first plurality of sub-converters is electrically coupled to a second transformer in the plurality of transformers and the second transformer is electrically coupled to a second sub-converter in the second plurality of sub-converters.

2. The device of claim 1, wherein the primary converter is electrically coupled to the secondary converter in series, in particular at least one port of the primary converter is electrically coupled to at least one port of the secondary converter.

3. The device of claim 2, wherein the output voltage of the common power converter is the potential difference between the node to which the at least one port node of the primary converter is electrically coupled to the at least one port of the secondary converter in series and another port, different from said at least one port, of the secondary converter.

4. The device of any one of claims 1 to 3, comprising a tertiary converter, wherein the tertiary converter comprises a third plurality of sub-converters and wherein the first transformer in the plurality of transformers is further electrically coupled to a first sub-converter in the third plurality of sub-converters and/or the second transformer in the plurality of transformers is further electrically coupled to a second sub-converter in the third plurality of sub-converters.

5. The device of any one of claims 1 to 4, wherein the first plurality of sub-converters in the primary converter are electrically coupled to each other in series and/or parallel, and/or the second plurality of sub-converters in the secondary converter are electrically coupled to each other in series and/or in parallel.

6. The device of any one of claims 1 to 5, wherein at least the first sub-converter in the first plurality of sub-converters, the first transformer of the plurality of transformers, and the first sub-converter in the second plurality of sub-converters form a modular solid-state transformer, SST or a part of the SST, in particular a dual active bridge converter.

7. The device of any one of claims 1 to 6, wherein each of the first, second, and/or third plurality of sub-converters comprises or is any one of a DC/DC converter, a DC/AC converter, a AC/DC converter, or an AC/AC converter, in particular a half bridge converter or a full bridge converter.

8. A method for controlling power of a common power converter according to any one of claims 1 to 7, the method comprising the steps of:
generating, using the first sub-converter in the first plurality of sub-converters, a first at least one AC voltage waveform;
generating, using the first sub-converter in the second plurality of sub-converters, a second at least one AC voltage waveform;
generating, based on the first at least one AC voltage waveform and on the second at least one AC voltage waveform, a first DC voltage across at least two ports of the first sub-converter in the second plurality of sub-converters;
generating, using the second sub-converter in the first plurality of sub-converters, a third at least one AC voltage waveform;
generating, using the second sub-converter in the second plurality of sub-converters, a fourth at least one AC voltage waveform; and
generating, based on the third at least one AC voltage waveform and on the fourth at least one AC voltage waveform, a second DC voltage across at least two ports of the second sub-converter in the second plurality of sub-converters.

9. A method for controlling power of a common power converter according to any one of claims 1 to 7, the method comprising the steps of:
generating, using the first sub-converter in the first plurality of sub-converters, a first at least one AC voltage waveform;
generating, using the first sub-converter in the second plurality of sub-converters, a second at least one AC voltage waveform;
generating, based on the first at least one AC voltage waveform and on the second at least one AC voltage waveform, a first DC voltage across at least two ports of the first sub-converter in the first plurality of sub-converters;
generating, using the second sub-converter in the first plurality of sub-converters, a third at least one AC voltage waveform;
generating, using the second sub-converter in the second plurality of sub-converters, a fourth at least one AC voltage waveform; and
generating, based on the third at least one AC voltage waveform and on the fourth at least one AC voltage waveform, a second DC voltage across at least two ports of the second sub-converter in the first plurality of sub-converters.

10. The method of claims 8 or 9, wherein the first at least one AC voltage waveform is phase shifted with respect to the second at least one AC voltage waveform with a first phase shift angle and/or the third at least one AC voltage waveform is phase shifted with respect to the fourth at least one AC voltage waveform with a second phase shift angle.

11. The method of claim 8, wherein the sum of the first DC voltage and the second DC voltage is equal to the voltage across at least two ports of the secondary converter.

12. The method of claim 9, wherein the sum of the first DC voltage and the second DC voltage is equal to the voltage across at least two ports of the primary converter.

13. A controller for controlling power of a common power converter comprising the common power converter according to any one of claims 1 to 7 and a processor, the processor being configured to perform the method according to any one of claims 8 to 12.

14. A system comprising the controller according to claim 13 performing the method according to any one of claims 8 to 12 and the common power converter according to any one of claims 1 to 7.
